# DEMANDE DE BREVET EUROPEEN

(11) **EP 0 647 915 A1**
(43) Date de publication de la demande: **12.04.1995**
(21) Numéro de dépôt: 94401419.0
(22) Date de dépôt: 23.06.1994
(51) Int. Cl.: G06K 1/12

(54) **Agencement pour l'enregistrement magnétique d'un message codé sur une piste magnétique portée par un document support**

(30) Priorité: 25.06.1993 FR 9307773
(71) Demandeur: COMPAGNIE GENERALE D'AUTOMATISME CGA-HBS, F-91220 Brétigny sur Orge (FR)
(72) Inventeur: Carcenac de Torne, Bernard, F-91510 Janville Sur Juine (FR)
(74) Mandataire: Gosse, Michel

(57) **Abrégé**

L'agencement comporte une tête d'écriture (E) dont les signaux d'écriture sont commandés par la lecture d'une piste de synchronisation (5) lue successivement par deux têtes de lecture (Lhd, Lhg), décalées respectivement d'une distance X de la tête d'écriture (E), la commutation de l'une à l'autre s'effectuant en milieu de piste par un compteur (23) recevant en entrée les signaux de synchronisation, une tête auxiliaire de compensation Ta, identique à la tête d'écriture (E) étant en outre située symétriquement de la tête d'écriture par rapport à l'axe (5) de la piste de lecture de synchronisation.

## Description

La présente invention concerne un agencement pour l'enregistrement magnétique d'un message codé sur une piste magnétique portée par un document support.

L'usage des tickets et cartes magnétiques est de plus en plus répandu et probablement appelé à un usage croissant et diversifié.

La tendance actuelle est que l'entraînement du document porteur d'une piste magnétique dans un lecteur-enregistreur au cours d'une prestation de service ou d'une transaction soit effectué manuellement par l'utilisateur, cela permet de simplifier la mécanique de ces appareils et procure un sentiment de sécurité à l'utilisateur qui conserve en main sa carte. Dans ce cas, afin de respecter la localisation spatiale précise des signaux inscrits par la tête d'écriture le long de la piste magnétique, il est nécessaire que les ordres d'écriture soient synchronisés avec le déplacement manuel de la carte. Diverses méthodes sont utilisées pour cette synchronisation, mais la plus connue et la plus sûre, est d'utiliser sur la carte elle-même, parallèlement à la piste magnétique d'écriture, une piste magnétique de synchronisation sur laquelle est enregistré un signal d'horloge. Une telle piste de synchronisation peut d'ailleurs être également utilisée dans les lecteurs-enregistreurs à avancement motorisé et la présente invention s'applique dans tous les cas où une telle piste de synchronisation est utilisée.

Par ailleurs, afin de rendre les fraudes plus difficiles et aussi pour se garantir contre les modifications accidentelles des d'aimantation des particules magnétiques de la piste, il est d'un grand intérêt d'utiliser des pistes magnétiques à haute coercitivité, cependant cela exige en conséquence une augmentation importante du champ magnétique nécessaire pour polariser à saturation la piste magnétique pendant l'écriture. Il en résulte que l'augmentation du champ magnétique d'écriture s'accompagne d'un champ de fuite important qui vient perturber la tête de lecture de la piste de synchronisation.

La présente invention a pour but de palier cet inconvénient et s'applique plus particulièrement dans le cas des pistes magnétiques à très haut champ coercitif, où elle trouve son intérêt principal, mais elle peut s'appliquer également dans les autres cas où, néanmoins, la tête de lecture peut être perturbée par le champ de fuite de la tête d'écriture même lorsque la piste est à champ coercitif beaucoup plus faible.

L'invention permet également d'assurer un bon découplage électromagnétique du rayonnement du circuit d'écriture vers le circuit de lecture de la piste de synchronisation.

L'invention a ainsi pour objet un agencement pour l'enregistrement magnétique d'un message codé sur une piste magnétique portée par un document support, comportant une tête magnétique d'écriture comprenant un circuit magnétique à entrefer, équipé d'un enroulement d'écriture recevant les signaux d'écriture électriques, l'envoi desdits signaux étant synchronisé par le moyen de signaux d'horloge provenant de la lecture d'une piste magnétique de synchronisation pré-encodée, lesdites pistes magnétiques d'écriture et de synchronisation étant parallèles et voisines l'une de l'autre, caractérisé en ce que deux têtes magnétiques de lecture, comportant chacune un circuit magnétique à entrefer, équipé d'un enroulement électrique, sont situées en face de ladite piste magnétique de synchronisation, décalées longitudinalement d'une distance X respectivement de part et d'autre de l'axe de l'entrefer de la tête magnétique d'écriture, et en ce que l'une des deux dites têtes de lecture est utilisée pour la synchronisation lors de l'écriture d'une première partie de ladite piste d'écriture, l'autre tête de lecture servant à la synchronisation lors de l'écriture d'une seconde partie de ladite piste, la commutation d'une tête de lecture à l'autre étant commandée par une information liée à la position du document support

Avantageusement ladite information est donnée par un compteur recevant en entrée lesdits signaux d'horloge. Cependant on peut utiliser toute autre information liée à la position du support: détection du bord avant de la carte, détection d'un trou, d'un signal optique (marque de couleur ou fluorescente) etc....

Selon une réalisation particulièrement avantageuse, l'agencement comporte en outre une tête magnétique auxiliaire, comportant un circuit magnétique à entrefer équipé d'un enroulement électrique, identique à la tête d'écriture magnétique, disposée symétriquement de celle-ci par rapport à l'axe de la piste magnétique de synchronisation, l'enroulement respectif de la tête d'écriture et de la tête auxiliaire recevant le même courant, le sens de passage respectif dudit courant dans l'enroulement respectif étant déterminé de façon à produire respectivement, au niveau de l'entrefer de chacune des deux dites têtes de lecture, un champ de même intensité et de sens opposé.

On va maintenant donner la description d'un exemple de mise en oeuvre de l'invention en se reportant au dessin annexé dans lequel :

La figure 1 est une vue schématique montrant la disposition des différentes têtes magnétiques d'un lecteur-enregistreur complet comportant l'ensemble pour l'écriture magnétique.

La figure 2 est une vue partielle agrandie de la figure 1.

La figure 3 est un schéma du montage électrique de l'ensemble pour l'écriture magnétique selon l'invention.

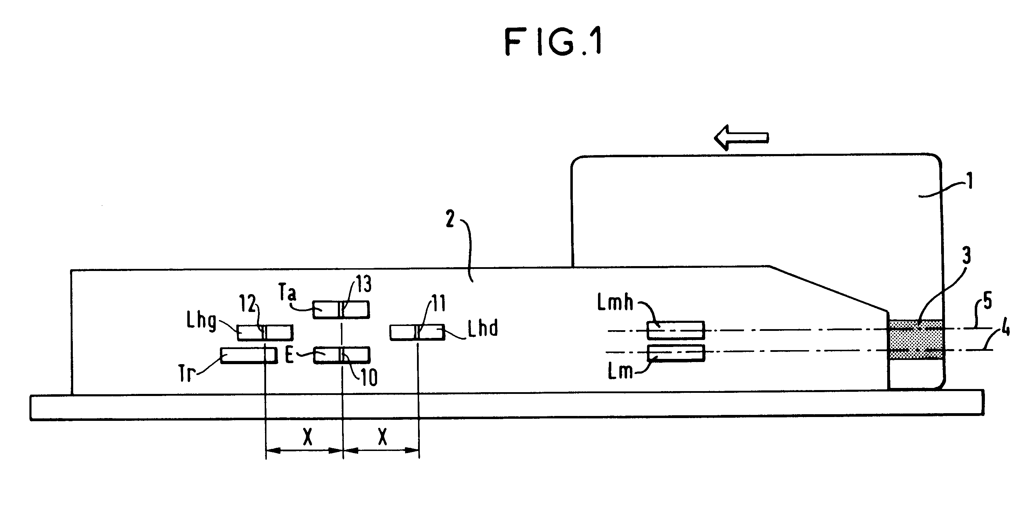

En se reportant à la figure 1, on voit un lecteur-enregistreur pour une carte 1. Il s'agit par exemple d'un lecteur-enregistreur 2 qui fonctionne à entraînement manuel de la carte 1. Celle-ci comporte une zone 3 sur laquelle a été déposée une encre magnétique.

Cette zone magnétique 3 est utilisée selon deux plages longitudinales d'axes 4 et 5 définissant une piste d'écriture pour la plage d'axe 4 et une piste de synchronisation pour la plage d'axe 5. Bien entendu, les deux pistes pourraient être physiquement séparées par une zone ne comportant pas d'encre magnétique, cependant, il est généralement plus simple de n'effectuer qu'une seule zone encrée distincte.

Dans le cas de l'exemple décrit, la piste magnétique de synchronisation, d'axe 5, ne comporte pas seulement un simple signal d'horloge, mais également une information permanente écrite dans un système de codage auto-porteur de son signal d'horloge, par exemple dans le système de codage biphase ou bifréquence. Cela ne change rien à l'invention.

On voit ainsi un lecteur-enregistreur 2 qui comporte une tête de lecture Lm pour la lecture préalable du message enregistré sur la piste d'écriture d'axe 4, une tête de lecture Lmh pour la lecture préalable du message permanent enregistré sur la piste de synchronisation d'axe 5, une tête d'écriture E pour écrire un message sur la piste d'écriture d'axe 4, deux têtes de lecture Lhd et Lhg respectivement décalées d'une distance X à droite et à gauche de l'entrefer 10 de la tête d'écriture E. Ces deux têtes Lhd et Lhg sont situées au droit de l'axe 5 de la plage définissant la piste de synchronisation. Ces deux têtes de lecture sont utilisées successivement pour la lecture de la piste de synchronisation d'axe 5 pour en extraire le signal d'horloge afin de permettre la commande de la tête d'écriture E.

La tête de lecture Lhd est utilisée pour la synchronisation de l'écriture d'une première partie, à gauche, de la piste d'écriture et la tête d'écriture Lhg est utilisée pour la synchronisation de l'écriture d'une deuxième partie, à droite, de la piste d'écriture.

Ce décalage d'une distance X, de la tête d'écriture E par rapport à chaque tête de lecture Lhd et Lhg a pour but d'augmenter l'isolement magnétique entre les têtes, ce qui réduit considérablement le niveau des perturbations électromagnétiques subies par la tête de lecture en fonctionnement de la part de la tête d'écriture E. En outre, le fait d'utiliser deux têtes de lecture Lhd et Lhg permet d'écrire sur toute la longueur de la piste, alors qu'une seule tête d'écriture décalée de X laisserait inutilisable pour l'écriture une longueur X de piste, soit au début, soit en fin de piste.

En pratique, dans une réalisation simplifiée, les deux parties écrites sur la piste 4 sont indépendantes et portent deux messages différents: elles ne nécessitent pas la continuité de leur synchronisation ni leur contiguïté propre. Les deux parties sont donc écrites avec un intervalle de quelques millimètres polarisé à champ constant pendant lequel s'effectue le changement de la tête synchronisante (Lhd vers Lhg).

Dans une réalisation plus élaborée, les deux parties du message écrit sur la piste 4 sont jointives grâce au recalage préalable des deux synchronisations extraites des têtes Lhg et Lhd.

Le lecteur-enregistreur comporte encore une tête magnétique auxiliaire Ta dont le but est de produire, au niveau de l'entrefer 11 de la tête de lecture Lhd et aussi au niveau de l'entrefer 12 de la tête de lecture Lhg un champ magnétique de même intensité que celui produit, au même endroit, par la tête d'écriture E, mais de sens opposé. Le lecteur-enregistreur comporte enfin une tête de relecture Tr de façon à vérifier que le message écrit par la tête d'écriture E est bien conforme à ce que l'on souhaite.

Dans l'exemple décrit, il est supposé qu'un message est préalablement écrit sur la piste d'écriture d'axe 4, qu'il est lu initialement par la tête de lecture Lm et qu'il est ensuite modifié par la tête d'écriture E, compte tenu de l'information donnée par cette lecture.

L'invention peut s'appliquer tout aussi bien si l'on souhaite inscrire un message alors que la piste d'écriture d'axe 4 ne comportait aucun message préalable. En revanche, la piste de synchronisation d'axe 5 doit, préalablement à l'écriture par la tête E, contenir dès l'origine un code de synchronisation puisque pour écrire, la tête E doit être synchronisée par une tête de lecture Lhd ou Lhg.

La tête magnétique auxiliaire Ta est physiquement identique à la tête d'écriture E et elle est disposée symétriquement de la tête d'écriture E par rapport à l'axe 5 de la piste de lecture de synchronisation.

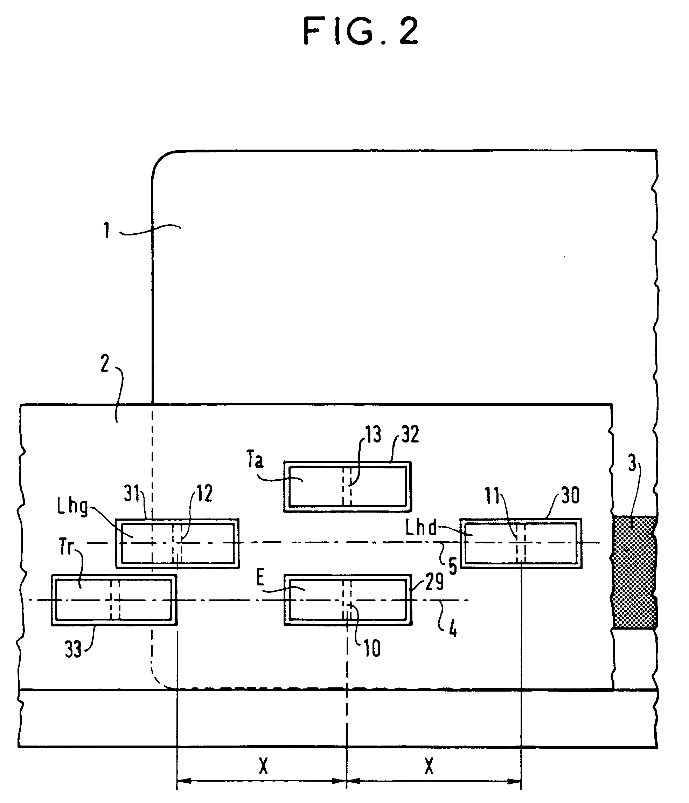

La figure 2 n'est qu'une vue agrandie, partielle, de la figure 1.

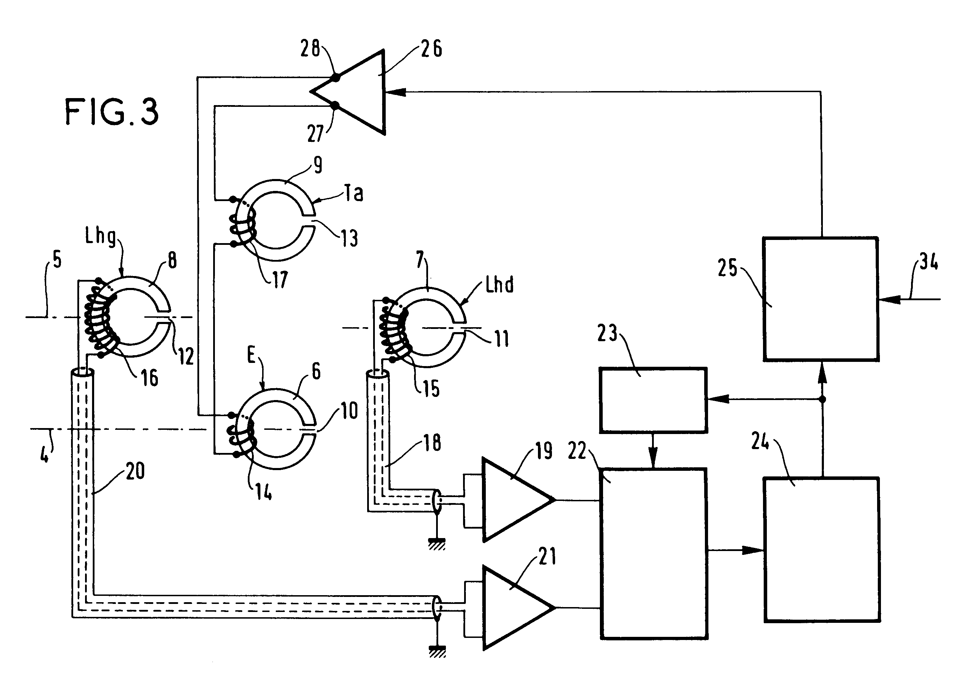

La figure 3 montre le montage électrique des quatre têtes magnétiques E, Lhd, Lhg et Ta essentielles de l'invention.

Sur cette figure, chaque tête magnétique est représentée avec son circuit magnétique, son entrefer et son enroulement : respectivement 6, 10 et 14 pour la tête d'écriture E ; 7, 11 et 15 pour la tête de lecture Lhd ; 8, 12 et 16 pour la tête de lecture Lhg et 9, 13 et 17 pour la tête auxiliaire Ta.

Bien entendu, dans la réalité, les quatre circuits magnétiques 6, 7, 8 et 9 ne sont pas orientés comme on le voit sur la figure, mais comme ils le seraient si l'on faisait pivoter chaque circuit de 90° autour d'un axe horizontal, dans le plan de la figure et passant par l'entrefer. Les deux entrefers 10 et 13 sont alignés perpendiculairement à l'axe 5.

L'enroulement de lecture 15 de la tête de lecture de synchronisation Lhd est relié par un câble blindé 18 à un amplificateur de signaux 19.

De même, l'enroulement de lecture 16 de la tête de lecture de synchronisation Lhg est relié par un câble blindé 20 à un amplificateur de signaux 21. La sortie de chaque amplificateur 19 et 21 est reliée à l'entrée d'un circuit sélecteur 22. La commutation de ce circuit de sélection est commandée par l'information provenant d'un compteur 23 qui compte les "tops" de synchronisation.

Avantageusement, l'instant de commutation où l'on passe de la tête Lhd à la tête Lhg pour gouverner l'écriture de la tête E, a lieu lorsque l'on est au milieu de la piste et cet instant est donné par le compteur 23 à partir de son nombre de "tops" accumulé. Cependant, il n'est pas absolument nécessaire d'effectuer cette commutation en milieu de piste. Il faut la faire au plus tard lorsque la tête Lhd arrive en bout de piste, c'est-à-dire lorsque la tête d'écriture E (son entrefer) est à une distance X de la fin de la piste.

La sortie du circuit de sélection 22 est reliée à un circuit 24 détecteur de transition magnétique élaborant les signaux de synchronisation ou d'horloge envoyés d'une part vers le compteur 23, et d'autre part vers un générateur de signaux d'écriture 25 qui reçoit par ailleurs en 34 des signaux de commande d'états logiques du message à écrire sur la piste magnétique d'écriture d'axe 4. En sortie du générateur 25 sont envoyés, sur un amplificateur d'écriture 26, les ordres du sens de passage du courant dans les enroulements 14 et 17 de la tête d'écriture E et de la tête magnétique auxiliaire Ta. Les deux sorties 27 et 28 de l'amplificateur 26 sont reliées aux enroulements 14 et 17 qui sont disposés en série.

Bien entendu, la liaison en série de ces deux enroulements est faite de telle sorte que le sens respectif du courant dans les deux enroulements 14 et 17 est tel qu'il produit respectivement, de la part des têtes E et Ta un champ de fuite, au niveau de l'entrefer 11 de la tête de lecture Lhd et aussi au niveau de l'entrefer 12 de la tête de lecture Lhg, qui est dans un sens opposé l'un de l'autre et bien entendu de même intensité puisque les têtes E et Ta sont identiques et alimentées par le même courant.

Comme on le voit sur la figure 1, et mieux sur la figure 2, la tête magnétique auxiliaire Ta est située en dehors de la zone 3 encrée magnétiquement donc en dehors des pistes d'axe 4 et 5.

Bien que les têtes de lecture Lhd et Lhg soient décalées d'une distance X, par exemple de 2 cm, de la tête d'écriture E, la longueur des pistes étant de 8,6 cm, et afin de diminuer au maximum les perturbations électromagnétiques apportées par la tête d'écriture E aux têtes de lecture Lhd et Lhg, ces têtes sont blindées et bien sûr aussi la tête auxiliaire Ta. C'est ce blindage que l'on a voulu représenter en 29, 30, 31 et 32 sur la figure 2. Un tel blindage est en soi classique et n'est pas décrit plus amplement.

La tête magnétique auxiliaire Ta a également, par rapport à la tête de relecture Tr, un certain effet ayant tendance à amoindrir la perturbation qu'elle subit de la part de la tête d'écriture E bien que cette tête auxiliaire ne soit pas symétrique de la tête d'écriture par rapport à l'axe 4 de la piste magnétique d'écriture devant laquelle se trouve la tête de relecture Tr, si bien que cette tête de relecture peut être relativement proche de la tête d'écriture, réduisant ainsi la longueur de l'appareil. La tête de relecture Tr porte également un blindage 33.

L'expérience a montré qu'avec une distance X = 20 mm et avec l'utilisation de la tête de compensation Ta, le niveau résiduel de parasites atteint entre 0,1 et 0,2 m volt pour un signal utile de 3 m volts à une vitesse de défilement moyenne de 10 cm/secondes en présence de pistes magnétiques respectant la standardisation ISO.

L'invention est particulièrement intéressante pour des pistes magnétiques à très haute coercivité, par exemple de 4000 Oersted, mais elle est également applicable dans le cas de pistes à coercivité plus faible. De la même façon, l'invention, décrite dans le cadre d'un appareil à entraînement manuel de la carte 1 peut également s'appliquer à un dispositif à entraînement motorisé dès lors que la tête d'écriture est synchronisée par le moyen d'une tête de lecture lisant une piste magnétique de synchronisation.

## Revendications

**1/** Agencement pour l'enregistrement magnétique d'un message codé sur une piste magnétique (4) portée par un document support (1), comportant une tête magnétique d'écriture (E) comprenant un circuit magnétique (6) à entrefer (10), équipé d'un enroulement (14) d'écriture recevant les signaux d'écriture électriques, l'envoi desdits signaux étant synchronisé par le moyen de signaux d'horloge provenant de la lecture d'une piste magnétique de synchronisation (5) pré-encodée, lesdites pistes magnétiques d'écriture (4) et de synchronisation (5) étant parallèles et voisines l'une de l'autre, caractérisé en ce que deux têtes magnétiques de lecture (Lhd, Lhg), comportant chacune un circuit magnétique (7, 8) à entrefer (11, 12), équipé d'un enroulement électrique (15, 16), sont situées en face de ladite piste magnétique de synchronisation (5), décalées longitudinalement d'une distance X respectivement de part et d'autre de l'axe de l'entrefer (10) de la tête magnétique d'écriture (E) et en ce que l'une (Lhd) des deux dites têtes de lecture est utilisée pour la synchronisation lors de l'écriture d'une première partie de ladite piste d'écriture, l'autre (Lhg) tête de lecture servant à la synchronisation lors de l'écriture d'une seconde partie de ladite piste, la commutation d'une tête de lecture (Lhd) à l'autre (Lhg) étant commandée par une information liée à la position du document support (1).

**2/** Agencement selon la revendication 1, caractérisé en ce que ladite information est donnée par un compteur (23) recevant en entrée lesdits signaux d'horloge.

**3/** Agencement selon l'une des revendications 1 ou 2, caractérisé en ce qu'il comporte en outre une tête magnétique auxiliaire (Ta), comportant un circuit magnétique (9) à entrefer (13) équipé d'un enroulement électrique (17), identique à la tête d'écriture magnétique (E), disposée symétriquement de celle-ci par rapport à l'axe (5) de la piste magnétique de synchronisation, l'enroulement respectif (14, 17) de la tête d'écriture (E) et de la tête auxiliaire (Ta) recevant le même courant, le sens de passage respectif dudit courant dans l'enroulement respectif de ces deux têtes magnétiques étant déterminé de façon à produire respectivement, au niveau de l'entrefer (11, 12) de chacune des deux dites têtes de lecture (Lhd, Lhg), un champ de même intensité et de sens opposé.
